(19) Europäisches Patentamt / European Patent Office / Office européen des brevets

(11) **EP 4 509 809 B1**

(12) **EUROPEAN PATENT SPECIFICATION**

(45) Date of publication and mention
of the grant of the patent:
**03.06.2026  Bulletin 2026/23**

(21) Application number: **23788287.3**

(22) Date of filing: **07.04.2023**

(51) International Patent Classification (IPC):
**G01K 7/42** *(2006.01)*   **G01K 1/02** *(2021.01)*
**F24F 11/30** *(2018.01)*   **F24F 11/64** *(2018.01)*
**G06F 1/20** *(2006.01)*   F24F 110/10 *(2018.01)*
F24F 110/20 *(2018.01)*   F24F 110/70 *(2018.01)*

(52) Cooperative Patent Classification (CPC):
**G01K 7/427; G01K 1/026; G06F 1/206;**
G01K 2201/00; G01K 2213/00

(86) International application number:
**PCT/JP2023/014438**

(87) International publication number:
**WO 2023/199869 (19.10.2023 Gazette 2023/42)**

(54) **ESTIMATION METHOD, PROGRAM, AND ESTIMATION SYSTEM**

SCHÄTZVERFAHREN, PROGRAMM UND SCHÄTZSYSTEM

PROCÉDÉ D'ESTIMATION, PROGRAMME ET SYSTÈME D'ESTIMATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **12.04.2022   JP 2022065880**

(43) Date of publication of application:
**19.02.2025  Bulletin 2025/08**

(73) Proprietor: **Panasonic Intellectual Property
Management Co., Ltd.**
**Kadoma-shi, Osaka 571-0057 (JP)**

(72) Inventors:
• **TSURUI, Shota**
**Kadoma-shi, Osaka 571-0057 (JP)**
• **KUBOTA, Hirofumi**
**Kadoma-shi, Osaka 571-0057 (JP)**

(74) Representative: **Appelt, Christian W.**
**Boehmert & Boehmert
Anwaltspartnerschaft mbB
Pettenkoferstrasse 22
80336 München (DE)**

(56) References cited:
**WO-A1-2021/235139      JP-A- 2008 075 973
JP-A- 2010 112 605      JP-A- 2021 012 078
JP-A- 2021 012 078      JP-A- 2021 103 019
JP-A- 2021 103 019      US-A1- 2013 166 241**

• **OKTAVIA ESI ET AL: "Inverse distance weighting
and kriging spatial interpolation for data center
thermal monitoring", 2016 1ST INTERNATIONAL
CONFERENCE ON INFORMATION
TECHNOLOGY, INFORMATION SYSTEMS AND
ELECTRICAL ENGINEERING (ICITISEE), IEEE, 23
August 2016 (2016-08-23), pages 69 - 74,
XP033036349, DOI: 10.1109/
ICITISEE.2016.7803050**

EP 4 509 809 B1

**Description**

**Technical Field**

The present disclosure generally relates to an estimation method, a program, and an estimation system, and more particularly relates to an estimation method, a program, and an estimation system, all of which are used to estimate the distribution of an environmental value in at least a partial region of a given space.

**Background Art**

JP 2021-12078 A discloses a technique for estimating the distribution of a temperature as an environmental value in a given space. A temperature distribution estimation apparatus disclosed in JP 2021-12078 A includes an acquirer, a spatial temperature characteristic estimator, and a temperature distribution estimator. The acquirer acquires a group of temperature data including a plurality of measured temperatures which have been measured at multiple measuring points in a predetermined space. The spatial temperature characteristic estimator estimates, based on the group of temperature data, a spatial temperature characteristic having anisotropy between the vertical and horizontal directions of the predetermined space. The temperature distribution estimator calculates a temperature at an arbitrary estimation point in the predetermined space by making spatial interpolation with respect to a plurality of measuring temperatures using a weight coefficient corresponding to distances from the plurality of measuring points to the estimation point and the spatial temperature characteristic, thereby estimating a temperature distribution in the predetermined space.

Nevertheless, the temperature distribution estimation apparatus of JP 2021-12078 A requires a relatively large number of sensors to estimate the distribution of the environmental value (e.g., the temperature distribution).

JP 2021-103019 A discloses 2D or 3D temperature distribution determination within an indoor space equipped with an air conditioning system using a statistical method, e.g. kriging.

The paper OKTAVIA ESI ET AL: "Inverse distance weighting and kriging spatial interpolation for data center thermal monitoring", 2016 1ST INTERNATIONAL CONFERENCE ON INFORMATION TECHNOLOGY, INFORMATION SYSTEMS AND ELECTRICAL ENGINEERING (ICITISEE), IEEE, 23 August 2016, pages 69-74, discloses inverse distance weighting (IDW) and kriging spatial interpolation for data center thermal monitoring, wherein temperature values are spatially interpolated (with IDW and kriging for comparison) in a 2D vertical plane from sensor measurement values.

US 2013/166241 A1 discloses estimation of 3D temperature distribution in a data center using a 2D physical temperature model, S-curve model fitting, and kriging.

**Summary of Invention**

An object of the present disclosure is to provide an estimation method, a program, and an estimation system, all of which may reduce the number of sensors required to estimate the distribution of an environmental value.

An estimation method according to an aspect of the present disclosure is a method for estimating a distribution of an environmental value in at least a partial region of a space. The environmental value is at least one selected from the group consisting of: a temperature; a humidity; and a concentration of a predetermined substance. The estimation method includes an acquisition step, a kriging step, and a longitudinal extension step. The acquisition step includes acquiring a measured value of the environmental value which has been measured by a sensor at a measuring point in the space. The kriging step includes obtaining a distribution of the environmental value on a reference plane by kriging method based on the measured value of the environmental value at the measuring point. The reference plane intersects with a height direction of the space and includes the measuring point of the sensor. The longitudinal extension step includes obtaining a distribution of the environmental value in the height direction in a longitudinal region based on the environmental value obtained in the kriging step with respect to a specified point on the reference plane and a function representing a variation in the environmental value in the height direction. The longitudinal region includes the specified point on the reference plane and extends in the height direction.

A program according to another aspect of the present disclosure is designed to cause one or more processors of a computer system to perform the estimation method described above.

An estimation system according to still another aspect of the present disclosure estimates a distribution of an environmental value in at least a partial region of a space. The environmental value is at least one selected from the group consisting of: a temperature; a humidity; and a concentration of a predetermined substance. The estimation system includes an acquirer, a kriger, and a longitudinal extender. The acquirer acquires a measured value of the environmental value which has been measured by a sensor at a measuring point in the space. The kriger obtains a distribution of the environmental value on a reference plane by kriging method based on the measured value of the environmental value at the measuring point. The reference plane intersects with a height direction of the space and includes the measuring point of the sensor. The longitudinal extender obtains a distribution of the environmental value in the height direction in a longitudinal region based on the environmental value obtained by the kriger with respect to a specified point on the reference plane and a function representing a variation in the environmental value in the height direction. The longitudinal region includes the specified point on the reference plane and extends in the height direction.

**Brief Description of Drawings**

FIG. 1 is a flowchart showing an estimation method according to a first embodiment;
FIG. 2 is a flowchart showing a kriging method employed in the estimation method;
FIG. 3 is a flowchart showing a procedure of creating a theoretical variogram according to the estimation method;
FIGS. 4A-4D are schematic representations illustrating the estimation method;
FIG. 5 illustrates a temperature distribution obtained in a space by simulation according to the estimation method;
FIG. 6 illustrates a temperature distribution obtained on a reference plane by simulation according to the estimation method;
FIG. 7 illustrates a plurality of sensors for use in the estimation method and longitudinal regions corresponding to the respective sensors;
FIG. 8 illustrates a temperature distribution obtained in a space by the kriging method employed in the estimation method;
FIG. 9 is a graph showing a relationship between an estimated value of a temperature extracted in the estimation method and the height;
FIG. 10 is a block diagram of an estimation system designed to perform the estimation method;
FIGS. 11A-11D are schematic representations illustrating an estimation method according to a second embodiment; and
FIGS. 12A-12D are schematic representations illustrating the processing of determining respective measuring points of a plurality of sensors in an estimation method according to a third embodiment.

**Description of Embodiments**

In the following description of embodiments, an estimation method, program, and estimation system according to the present disclosure will be described with reference to the accompanying drawings. The drawings to be referred to in the following description of embodiments are all schematic representations. Thus, the ratio of the dimensions (including thicknesses) of respective constituent elements illustrated on the drawings does not always reflect their actual dimensional ratio.

(First embodiment)

(Overview)

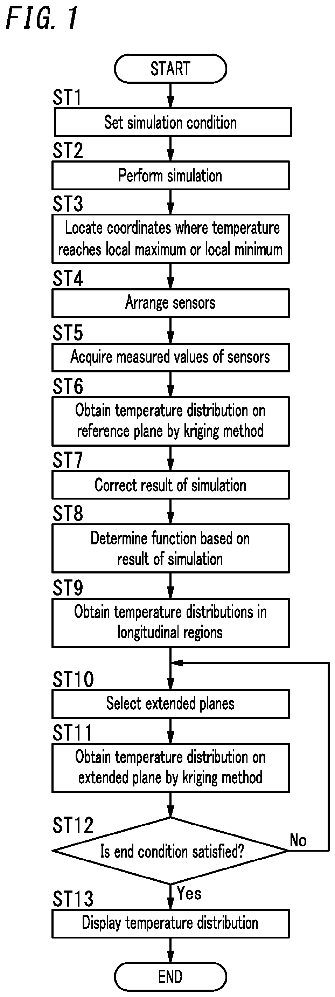

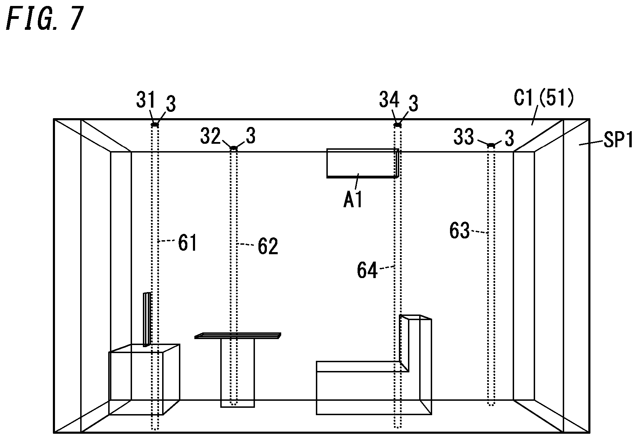

As shown in FIG. 1, an estimation method according to an exemplary embodiment is a method for estimating the distribution of an environmental value in at least a partial region of a space SP1 (refer to FIG. 7). The environmental value is at least one of a temperature, a humidity, or the concentration of a predetermined substance. In the example shown in FIG. 1, the environmental value is a temperature. Examples of the predetermined substance include, without limitation, carbon dioxide, carbon monoxide, formaldehyde, and fine particles in the air.

The space SP1 may be, for example, an indoor space of a facility. Examples of the facility include dwelling houses, stores, office buildings, factories, warehouses, shopping malls, libraries, art museums, museums, amusement facilities, airports, railway stations, ballparks, hotels, and hospitals. Alternatively, the facility may also be a moving vehicle such as a watercraft or a railway train.

The estimation method includes an acquisition step (Step ST5), a kriging step (Step ST6), and a longitudinal extension step (ST9). The acquisition step includes acquiring a measured value of the environmental value which has been measured by a sensor 3 at a measuring point in the space SP1. The kriging step includes obtaining the distribution of the environmental value on a reference plane 51 (refer to FIG. 7) by kriging method based on the measured value of the environmental value at the measuring point. The reference plane 51 intersects with the height direction of the space SP1 and includes the measuring point of the sensor 3. The longitudinal extension step includes obtaining the distributions of the environmental value in the height direction in longitudinal regions 61-64 based on the environmental values obtained in the kriging step with respect to specified points 31-34 on the reference plane 51 and a function representing a variation in the environmental value in the height direction. The longitudinal regions 61-64 include the specified points 31-34 on the reference plane 51 and extend in the height direction.

This embodiment allows the distributions of the environmental value to be obtained in the longitudinal extension step. This enables reducing the number of sensors 3 required compared to a situation where a plurality of sensors 3 are installed in a single longitudinal region.

Note that in this embodiment, the specified points 31-34 agree with the measuring points of the (plurality of) sensors 3. That is to say, the environmental values obtained in the kriging step with respect to the specified points 31-34 agree with the measured values of the (plurality of) sensors 3. In other words, the longitudinal extension step is the step of obtaining the distributions of the environmental value in the height direction in the longitudinal regions 61-64 based on the measured values acquired in the acquisition step and a function representing a variation in the environmental value in the height direction. The longitudinal regions 61-64 include the specified points and extend in the height direction.

This estimation method allows a three-dimensional distribution of the environmental value to be estimated. In the following description of embodiments, a situation where a temperature distribution is estimated by the estimation method will be described as an example. That is to say, the environmental value according to this embodiment is a temperature.

Optionally, the estimation method may also be implemented as a program. A program according to this embodiment is designed to cause one or more processors of a computer system to perform the estimation method described above. The program may be stored in a non-transitory storage medium which is readable for a computer system.

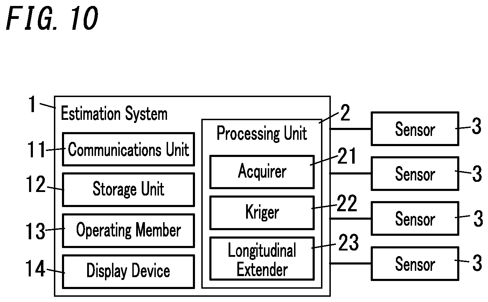

The estimation method may also be implemented as an estimation system 1 as shown in FIG. 10. The estimation system 1 estimates the distribution of an environmental value in at least a partial region of a space SP1. The environmental value is at least one selected from the group consisting of: a temperature; a humidity; and a concentration of a predetermined substance. The estimation system 1 includes an acquirer 21, a kriger 22, and a longitudinal extender 23. The acquirer 21 acquires a measured value of the environmental value which has been measured by a sensor 3 at a measuring point in the space SP1. The kriger 22 obtains the distribution of the environmental value on a reference plane 51 by kriging method based on the measured value of the environmental value at the measuring point. The reference plane 51 intersects with a height direction of the space SP1 and includes the measuring point of the sensor 3. The longitudinal extender 23 obtains the distributions of the environmental value in the height direction in longitudinal regions 61-64 based on the environmental values obtained by the kriger 22 with respect to specified points 31-34 on the reference plane 51 and a function representing a variation in the environmental value in the height direction. The longitudinal regions 61-64 include the specified points 31-34 on the reference plane 51 and extend in the height direction.

(Details)

(1) Estimation method

First, a configuration for the estimation system 1 will be described with reference to FIG. 10.

The estimation system 1 includes a communications unit 11, a storage unit 12, an operating member 13, a display device 14, and a processing unit 2.

The estimation system 1 acquires results of detections from a plurality of (e.g., four in the example shown in FIG. 10) sensors 3. Each sensor 3 according to this embodiment is a temperature sensor. The estimation system 1 acquires a temperature measured value from each of the sensors 3.

The estimation system 1 includes a computer system including one or more processors and a memory. At least some functions of the estimation system 1 are performed by making the processor of the computer system execute a program stored in the memory of the computer system. The program may be stored in the memory. Alternatively, the program may also be downloaded via a telecommunications line such as the Internet or distributed after having been stored in a non-transitory storage medium such as a memory card.

The processing unit 2 includes one or more such processors. The processing unit 2 includes the acquirer 21, the kriger 22, and the longitudinal extender 23. Note that the acquirer 21, the kriger 22, and the longitudinal extender 23 only represent respective functions to be performed by the processing unit 2 and do not necessarily have a substantive configuration. It should also be noted that the acquirer 21, the kriger 22, and the longitudinal extender 23 are only minimum required functions, not all functions, for the processing unit 2.

The acquirer 21 acquires, via the communications unit 11, the temperature measured value measured by the sensor 3. The kriger 22 obtains a temperature distribution on the reference plane 51 by the kriging method. The longitudinal extender 23 obtains temperature distributions in the height direction in the longitudinal regions 61-64.

The communications unit 11 includes a communications interface device. The communications unit 11 is ready to communicate with the plurality of sensors 3 via the communications interface device. As used herein, the phrase "ready to communicate" refers to the ability to transmit and receive signals either directly or indirectly via, for example, a network or a relay by any appropriate wired or wireless communication method.

The storage unit 12 is a storage device implemented as, for example, a hard disk drive (HDD) or a solid-state drive (SSD). The storage unit 12 stores information. For example, the storage unit 12 stores a program to be executed by the processing unit 2.

The operating member 13 accepts an operating command entered by the user. The operating member 13 may include, for example, at least one member selected from the group consisting of a button, a keyboard, a mouse, a touchpad, a touchscreen panel, and a touchscreen panel display.

The display device 14 includes a display. The display device 14 displays an image thereon. The display device 14 displays a temperature distribution obtained by the estimation method. More specifically, the display device 14 may display, for example, a three-dimensional image of the space SP1 which is colored in multiple different colors according to the level of the temperature.

(2) Estimation method

Next, the overall flow of the estimation method will be described with reference to FIG. 1 and other drawings. Note that the flow shown in FIG. 1 is only an exemplary procedure of the estimation method according to the present disclosure and should not be construed as limiting. Optionally, the processing steps shown in FIG. 1 may be performed in a different order from the illustrated one, some of the processing steps shown in FIG. 1 may be omitted as appropriate, and/or an additional processing step may be performed as needed.

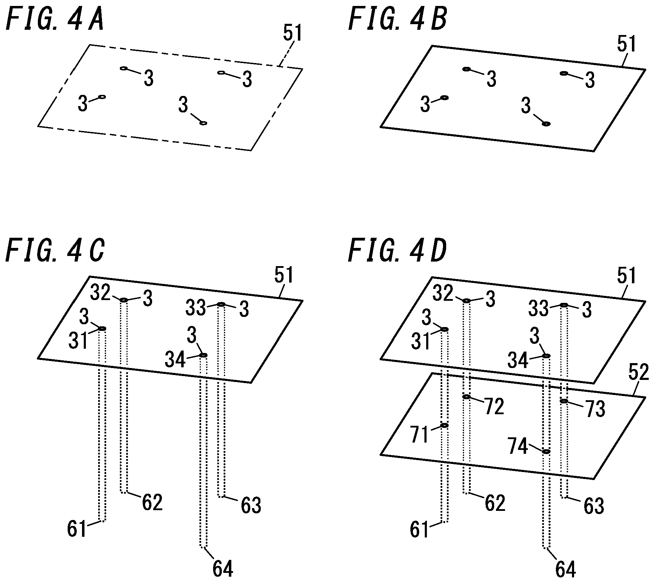

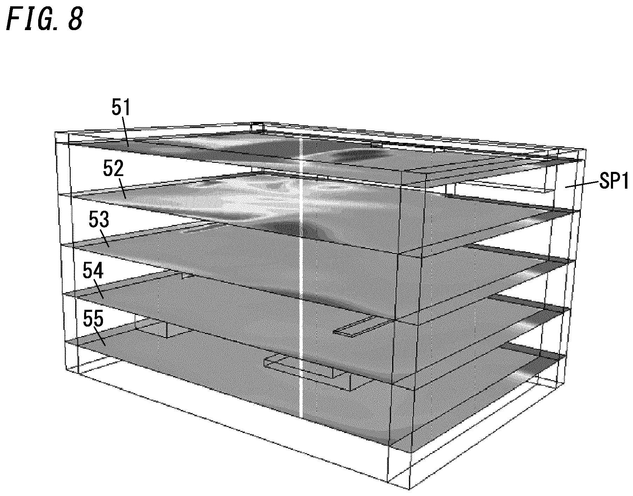

FIGS. 4A-4D schematically illustrate the estimation method according to this embodiment. First, as shown in FIG. 4A, a plurality of (e.g., four) sensors 3 are arranged on a reference plane 51. Next, the temperature distribution on the reference plane 51 is obtained by the kriging method based on the respective measured values of the sensors 3 as shown in FIG. 4B. Next, as shown in FIG. 4C, the temperature distributions of a plurality of (e.g., four) longitudinal regions 61-64 extending in the height direction from a plurality of (e.g., four) specified points 31-34 on the reference plane 51 (e.g., from the respective measuring points of the sensors 3 in this example) are obtained based on a function. In addition, estimated temperatures at a plurality of (e.g., four) extended points 71-74 on an extended plane 52, which is parallel to the reference plane 51, are extracted from the respective temperature distributions of the plurality of longitudinal regions 61-64. Then, the temperature distribution on the extended plane 52 is obtained as shown in FIG. 4D by the kriging method based on the respective estimated temperatures at the four extended points 71-74. Performing this series of processing steps on each of a plurality of extended planes 52-55 allows the respective temperature distributions on the reference plane 51 and the plurality of extended planes 52-55 to be obtained as shown in FIG. 8. In the estimation method according to this embodiment, data including the respective temperature distributions on the reference plane 51 and the extended planes 52-55 is regarded as the distribution of the environmental value (temperature) in the space SP1. The number of the extended planes may be set as appropriate. Increasing the number of the extended planes enables obtaining the temperature distribution with a higher resolution.

In addition, the estimation method according to this embodiment further includes a simulation step (Step ST2) including making a simulation of the distribution of the environmental value (temperature) in the space SP1. The temperature distribution obtained in the simulation step may be different from a temperature distribution finally obtained and output by the estimation method. A temperature distribution more accurate than the temperature distribution obtained in the simulation step may be obtained by performing the estimation method according to this embodiment. In particular, in the estimation method according to this embodiment, the temperature distribution is obtained by the kriging method based on the measured values of the plurality of sensors 3, thus achieving the advantage of making it easier to reflect the actual temperature distribution in the space SP1.

Next, referring to FIG. 1, first, a simulation condition is set (in Step ST1) to perform a simulation of the temperature distribution in Step ST2. More specifically, the simulation condition is set by making the user operate the operating member 13, for example. Optionally, at least a part of the simulation condition may be set automatically by the estimation system 1. In this embodiment, the simulation performed in Step ST2 is a thermal fluid simulation.

As used herein, to "set the simulation condition" may refer to, for example, determining exactly when to estimate the temperature distribution. Specifically, to set the simulation condition includes setting the season, the time, and other parameters. In addition, to "set the simulation condition" may also refer to, for example, acquiring design data of the facility including the space SP1. In this embodiment, the design data is three-dimensional model data. Furthermore, to "set the simulation condition" may further refer to, for example, acquiring information about the operating condition of equipment installed in the facility. Examples of the equipment include an air conditioner A1 (refer to FIG. 7) and a heat source. Examples of the operating condition for the air conditioner A1 include the installation location, preset temperature, preset air velocity, preset air volume, orientation of the air outlet, and temperature at the air outlet of the air conditioner A1. Furthermore, to "set the simulation condition" may further refer to setting information about the climate. Examples of the information about the climate include the quantity of solar radiation and the weather.

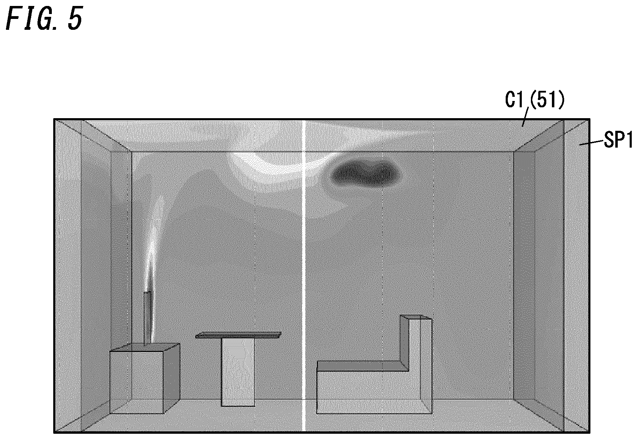

Next, the processing unit 2 performs the simulation (in Step ST2). An exemplary result of the simulation is shown in FIG. 5.

More specifically, the simulation to be performed in Step ST2 is a simulation for obtaining a three-dimensional temperature distribution in the space SP1. That is to say, if three axes of coordinates which are perpendicular to each other are an X-axis, a Y-axis, and a Z-axis, respectively, and the coordinates in the space SP1 are represented by P (x, y, z), a temperature T (P (x, y, z)) corresponding to an arbitrary set of coordinates P (x, y, z) belonging to the space SP1 is obtained in Step ST2. For example, the entire room shown in FIGS. 5 and 7 is set as a target space SP1 for the simulation. In that case, the temperature distribution in the entire room is obtained in Step ST2.

In this case, the simulation is made based on at least the three-dimensional data of the facility. Also, if the environmental value is at least the temperature selected from the group consisting of a temperature, a humidity, and the concentration of a predetermined substance, then the simulation is preferably performed based on information about the temperature at the air outlet of the air conditioner A1 for air-conditioning the space SP1. This improves the accuracy of the simulation.

That is to say, the simulation step preferably includes obtaining the temperature distribution on the reference plane 51 by making a simulation based on the three-dimensional model data and the information about the temperature at the air outlet of the air conditioner A1 for air-conditioning the space SP1. The information about the temperature at the air outlet may be measured by either a temperature sensor provided separately from the sensors 3 or the air conditioner A1, whichever is appropriate.

Next, the processing unit 2 determines the arrangement of the plurality of sensors 3. First, the processing unit 2 extracts data about the temperature distribution on the reference plane 51 from the temperature distribution obtained in Step ST2. The reference plane 51 may be a preset one or determined by making the user operate the operating member 13, whichever is appropriate. The reference plane 51 is a plane including the respective measured points of the plurality of sensors 3 and intersecting with the height direction (Z-axis direction) of the space SP1. In this embodiment, the space SP1 includes a ceiling surface C1 (refer to FIG. 7) and the reference plane 51 is the ceiling surface C1 of the space SP1. In addition, in this embodiment, a plurality of sensors 3 are provided on the reference plane 51 (refer to FIG. 7).

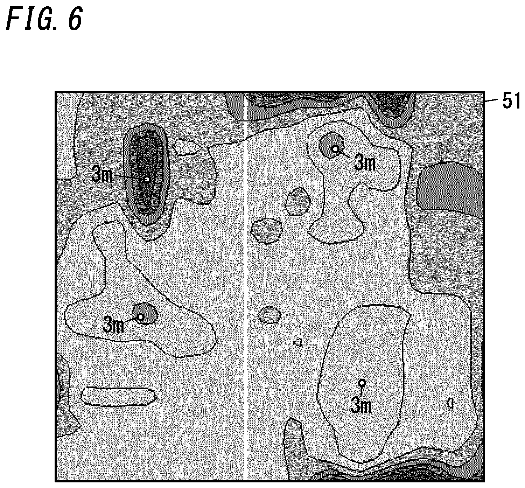

The processing unit 2 extracts the data about the temperature distribution on the reference plane 51, and then locates, by reference to the data, at least one point where the temperature reaches either a local maximum or a local minimum (in Step ST3) to define the point to be the measuring point (preset point) of the sensor 3. FIG. 6 shows exemplary data about the temperature distribution on the reference plane 51 which has been extracted from the result of the simulation. Based on the data shown in FIG. 6, the processing unit 2 determines the temperature to be either a local maximum or a local minimum at each of four points 3m, for example, and defines these four points 3m to be the measuring points of the sensors 3.

The processing unit 2 notifies the user of the four points 3m. For example, the processing unit 2 may make the display device 14 display the four points 3m. Watching the display device 14, the user installs the four sensors 3 at four points 3m in the real space SP1 (in Step ST4). Alternatively, when determining the four points 3m displayed on the display device 14 to be inappropriate, the user resets the simulation condition to perform the series of processing steps ST1-ST3 all over again such that the measuring points of the sensors 3 are defined at appropriate points.

As can be seen, the estimation method according to this embodiment further includes the simulation step (Step ST2) and the measuring point determination step (Step ST3). The simulation step includes obtaining the distribution of the environmental value (temperature) on the reference plane 51 by making a simulation based on the three-dimensional model data of the facility. The facility includes the space SP1. The measuring point determination step includes determining at least one point, which is included in the reference plane (51) and at which the environmental value (temperature) reaches either a local maximum or a local minimum on the reference plane 51 according to the simulation, to be the measuring point of the sensor 3.

After a plurality of (e.g., four) sensors 3 have been installed, the acquirer 21 acquires the measured values of the respective sensors 3 (in Step ST5). In this embodiment, the measured values are measured temperatures.

Next, the kriger 22 obtains the temperature distribution on the reference plane 51 by the kriging method based on the respective measured values of the sensors 3 (in Step ST6). The kriging method will be described in further detail later. FIG. 8 illustrates an exemplary temperature distribution on the reference plane 51 which has been obtained in Step ST6.

Next, the processing unit 2 corrects, based on the respective measured values of the plurality of sensors 3, the result of simulation (temperature distribution) obtained in Step ST2. More specifically, the processing unit 2 adjusts the result of simulation to the respective measured values of the plurality of sensors 3.

Take one sensor 3 out of the plurality of sensors 3, for example. The processing unit 2 calculates a value (i.e., difference) by subtracting the temperature obtained by the simulation with respect to the measuring point of the sensor 3 from the measured value of the sensor 3. In the same way, the processing unit 2 also calculates a value (i.e., difference) by subtracting the temperature obtained by the simulation with respect to the measuring point of each of the other sensors 3 from the measured value of the sensor 3. Then, the processing unit 2 corrects the result of the simulation based on the respective differences. More specifically, the processing unit 2 may add the average value of the differences to the temperature obtained by the simulation. Even more specifically, a corrected result of simulation is obtained by adding the average value of the differences to the temperature at every set of coordinates where the temperature has been obtained by the simulation. This narrows the gap between the result of the simulation and the measured values of the sensors 3.

As used herein, the "result of the simulation" from Step ST8 and on refers to the corrected result of the simulation.

As described above, the simulation step (Step ST2) includes obtaining the distribution of the environmental value (temperature) in the space SP1. The space SP1 has a length in the height direction. Thus, the result of the simulation includes a temperature distribution in the height direction.

The estimation method according to this embodiment further includes a function determination step (Step ST8). The function determination step includes determining, based on the distribution of the environmental value obtained in the simulation step for the space SP1, a function representing a variation in the environmental value in the height direction (Z-axis direction). Step ST9 includes obtaining, using the function, temperature distributions in a plurality of longitudinal regions 61-64 (refer to FIG. 7).

The longitudinal regions 61-64 may be, for example, rectangular parallelepiped regions. Note that the longitudinal regions 61-64 only need to have a length in at least the Z-axis direction and do not have to have a length in the X-axis direction or the Y-axis direction.

A plurality of functions are defined to represent the variation in the environmental value in the height direction in the space SP1. The plurality of functions correspond one to one to the plurality of longitudinal regions 61-64. That is to say, in this example, four functions are defined. Each of the plurality of the longitudinal regions 61-64 includes its corresponding specified point 31-34 (which is the measuring point of the sensor 3 in this example). Specifically, the longitudinal region 61 includes the specified point 31, the longitudinal region 62 includes the specified point 32, the longitudinal region 63 includes the specified point 33, and the longitudinal region 64 includes the specified point 34.

The longitudinal extension step (Step ST9) includes obtaining the distribution of the environmental value in the height direction in each of the plurality of the longitudinal regions 61-64 based on the environmental value obtained in the kriging step (Step ST6) with respect to a corresponding one of the specified points 31-34 and a corresponding one of the plurality of functions. Specifically, taking the longitudinal region 61, for example, the longitudinal extension step includes obtaining the distribution of the environmental value in the height direction in the longitudinal region 61 based on the environmental value obtained in the kriging step with respect to the specified point 31 and the function representing the variation in the environmental value in the height direction in the longitudinal region 61.

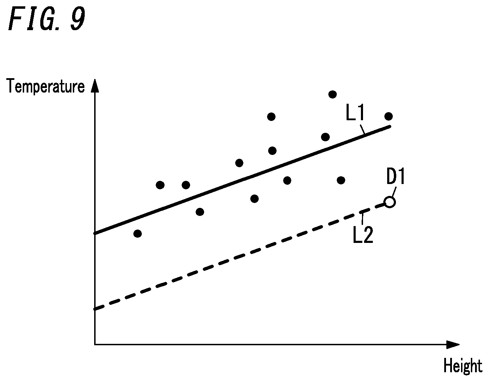

The processing of determining a function corresponding to the longitudinal region 61 in the function determination step (Step ST8) will be described. First, the processing unit 2 extracts the temperature distribution in the longitudinal region 61 from the result of the simulation. This allows an estimated temperature value to be obtained with respect to each Z coordinate (height) in the longitudinal region 61. In FIG. 9, a plurality of dots indicates the estimated temperature values with respect to respective Z coordinates. Next, the processing unit 2 approximates, by a function, the relationship between the Z coordinate and the temperature in the longitudinal region 61. In this manner, a function (indicated by the solid line L1 in FIG. 9) corresponding to the longitudinal region 61 is determined. The processing unit 2 may determine the relationship between the Z coordinate and the temperature by regression analysis, for example. Also, the function thus determined may be, for example, a linear function.

The functions corresponding to the other longitudinal regions 62-64, respectively, are determined by performing the same processing as the processing of determining the function corresponding to the longitudinal region 61.

The longitudinal extension step (Step ST9) includes obtaining the distribution of the environmental value (temperature) in the height direction in the longitudinal region 61 based on the environmental value obtained in the kriging step with respect to the specified point 31 (which is equal to the measured value of the sensor 3 that uses the specified point 31 as its measuring point, in this example) and its corresponding function. Suppose, for example, the Z coordinate of the specified point 31 and the measured value of the sensor 3 that uses the specified point 31 as its measuring point are indicated by the open circle D1 shown in FIG. 9. In this case, a function determined by translating the function (indicated by the solid line L1) to the position indicated by the open circle D1 is the temperature distribution obtained in the longitudinal extension step. That is to say, the temperature distribution in the longitudinal region 61 may be obtained by overlapping the function with the measured value of the sensor 3.

Next, it will be described generally how to obtain the temperature distribution in the longitudinal region 61 in the longitudinal extension step. In this case, a function corresponding to the longitudinal region 61 and representing the temperature T is expressed as the sum of a function $f(z)$ depending on the Z coordinate and a constant C. That is to say, $T = f(z) + C$ is supposed to be satisfied. In addition, the coordinates of the open circle D1 shown in FIG. 9 are supposed to be $(z_0, T_0)$. In other words, the Z coordinate of the specified point 31 is supposed to be $z_0$ and the environmental value obtained in the kriging step with respect to the specified point 31 is supposed to be $T_0$. In this case, using D, obtained by modifying the equation $T_0 = f(z_0) + C$, allows the temperature distribution t in the longitudinal region 61 to be calculated by $t = f(z) + D$.

The longitudinal extension step includes obtaining the respective temperature distributions in the other longitudinal regions 62-64 by performing the same processing as the processing of obtaining the temperature distribution in the longitudinal region 61.

Next, in Step ST10, the processing unit 2 selects extended planes. In this case, the larger the number of the extended planes is, the higher the resolution of the temperature distribution is. The user may set the number of the extended planes according to the resolution required. Also, the plurality of extended planes may be arranged at equal intervals or at inequal intervals, whichever is appropriate. In this embodiment, four extended planes 52-55 are supposed to be arranged at equal intervals under the reference plane 51 as shown in FIG. 8. In Step ST10, the processing unit 2 selects one of these extended planes 52-55. In the following description, the extended plane 52 is supposed to be selected first.

The kriger 22 obtains the temperature distribution on the extended plane 52 by the kriging method (in Step ST11). More specifically, the processing unit 2 first extracts the estimated temperature at an extended point 71 (refer to FIG. 4D) on the extended plane 52 from the temperature distribution obtained in Step ST9 with respect to the longitudinal region 61. In the same way, the processing unit 2 also extracts the estimated temperatures at the other extended points 72-74 from the temperature distributions in the longitudinal regions 62-64. Next, the kriger 22 obtains the temperature distribution on the extended plane 52 by the kriging method based on the estimated temperatures at the extended points 71-74.

Steps ST10 and ST11 will be repeated (refer to Step ST12) until the end condition is satisfied. In this example, the end condition is that the temperature distribution be obtained by the kriging method with respect to all of the extended planes 52-55 that have been set in advance.

As can be seen, the estimation method according to this embodiment further includes an extraction step and an extended kriging step. The extraction step includes extracting the environmental values at extended points 71-74 from the distributions of the environmental value in the height direction obtained in the longitudinal extension step with respect to the longitudinal regions 61-64. The extended points 71-74 are included in an extended plane 52 parallel to the reference plane 51. The extended points 71-74 and the specified points 31-34 are arranged in the height direction (Z-axis direction). More specifically, each of the plurality of extended points 71-74 and a corresponding one of the specified points are arranged in the height direction. Even more specifically, each extended point and its corresponding specified point have the same X and Y coordinates and different Z coordinates.

The extended kriging step includes obtaining the distribution of the environmental value on the extended plane 52 by the kriging method based on the environmental value extracted in the extraction step.

A plurality of such extended planes are defined. In FIG. 8, extended planes 52-55 are defined. The estimation method includes obtaining the distribution of the environmental value on each of the plurality of extended planes 52-55 by performing the extraction step and the extended kriging step with respect to each of the plurality of extended planes 52-55. Furthermore, data including the distribution of the environmental value on each of the reference plane 51 and the plurality of extended planes 52-55 is regarded as the distribution of the environmental value in the space SP1.

When the end condition is satisfied in Step ST12 (if the answer is YES in Step ST12), the display device 14 displays the temperature distribution obtained by the kriging method (in Step ST13). For example, the temperature distribution on the reference plane 51 and the temperature distributions on the plurality of extended planes 52-55 may be displayed as shown in FIG. 8. Alternatively, a stereoscopic temperature distribution such as the one shown in FIG. 5 may be displayed by interpolating the temperature distribution data in the respective gaps between the reference plane 51 and the extended planes 52-55 to smoothly connect the temperature distribution on the reference plane 51 to the temperature distributions on the extended planes 52-55. Still alternatively, the temperature distributions may be represented and output as numerical values.

Optionally, performing the series of Steps ST5-ST13 repeatedly allows the distribution of the environmental value to be updated to follow up with the variation in the environmental value (temperature) measured by the plurality of sensors 3.

(3) Details of kriging method

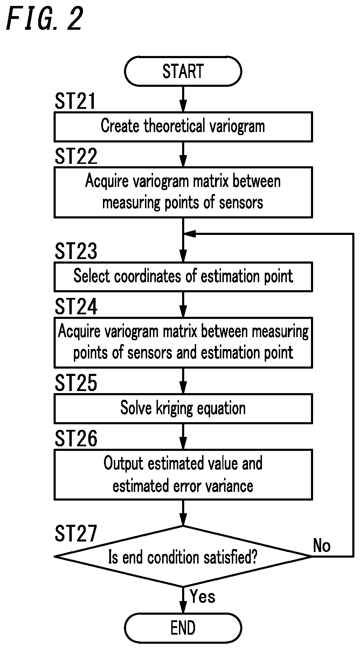

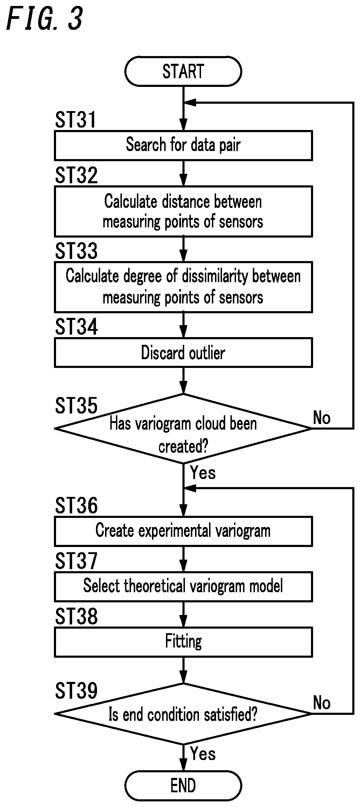

Next, an example of the kriging method to be performed in this estimation method will be described with reference to FIGS. 2 and 3.

Note that Step ST6 includes obtaining the temperature distribution on the reference plane 51 by the kriging method based on the measured values of the plurality of sensors 3. On the other hand, Step ST11 includes obtaining the temperature distribution on the extended plane 52 (or on the extended plane 53, 54, 55) in the same procedure as in Step ST6 by replacing the measured values of the plurality of sensors 3 with the environmental values at the extended points 71-74 and replacing the reference plane 51 with the extended plane 52 (or the extended plane 53, 54, 55). Thus, in the following description, only the kriging method to be performed in Step ST6 will be described with the description of the kriging method to be performed in Step ST11 omitted.

The kriging method shown in FIG. 2 is an ordinary kriging method. As shown in FIG. 2, first, the processing unit 2 creates a theoretical variogram (in Step ST21). The processing of creating the theoretical variogram will be described in detail later.

Next, the processing unit 2 acquires a variogram matrix between the respective measuring points of the plurality of sensors 3 (in Step ST22).

Subsequently, the processing unit 2 selects the coordinates of an estimation point (in Step ST23). As used herein, the "estimation point" refers to the coordinates of a target at which the environmental value (temperature) is estimated. In this example, the estimation point is a point on the reference plane 51.

Thereafter, the processing unit 2 acquires a variogram matrix between the respective measuring points of the plurality of sensors 3 and the estimation point (in Step ST24).

Then, the processing unit 2 solves the kriging equation (in Step ST25) and outputs an estimated value thus obtained of the environmental value (temperature) at the estimation point and an estimated error variance (in Step ST26).

The processing unit 2 will repeatedly perform this series of Steps ST23-ST26 until the condition for ending the kriging step is satisfied (refer to Step ST27). In this manner, the processing unit 2 obtains the estimated value of the environmental value at each estimation point. The condition for ending the kriging step may be, for example, that the estimated value of the environmental value be obtained at every point on the reference plane 51.

Next, the processing of creating a theoretical variogram will be described with reference to FIG. 3.

First, the processing unit 2 searches for a data pair (in Step ST31). Specifically, the processing unit 2 selects two measuring points from a plurality of measuring points respectively corresponding to the plurality of sensors 3. Next, the processing unit 2 calculates the distance between the two measuring points thus selected (in Step ST32). In addition, the processing unit 2 also calculates the degree of dissimilarity between the two measuring points thus selected (in Step ST33). The processing unit 2 also discards outliers (in Step ST34).

The processing unit 2 creates a variogram cloud by repeatedly performing the series of Steps ST31-ST34 with the data pair changed (refer to Step ST35).

Next, the processing unit 2 creates an experimental variogram (which is also called a "sample variogram") (in Step ST36). Furthermore, the processing unit 2 selects a theoretical variogram model (in Step ST37). The processing unit 2 fits the experimental variogram to the theoretical variogram model (in Step ST38).

The processing unit 2 repeatedly performs this series of Steps ST36-ST38 (refer to Step ST39). When creating the experimental variogram in Step ST36, the processing unit 2 reviews the lag setting as appropriate. Step ST37 includes selecting a theoretical variogram different from the theoretical variogram model that has been selected once. By repeatedly performing this series of Steps ST36-ST38, the processing unit 2 selects a most fitting theoretical variogram model and defines such a theoretical variogram model to be the theoretical variogram.

(Second embodiment)

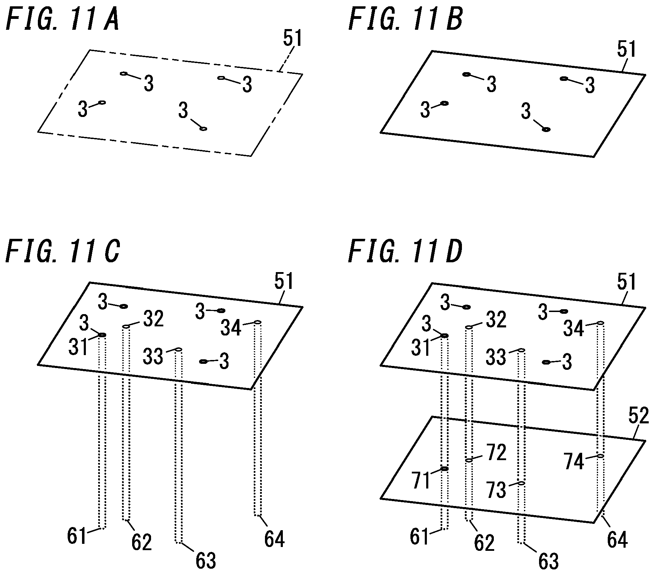

Next, an estimation method according to a second embodiment will be described with reference to FIGS. 11A-11D. In the following description, any constituent element of this second embodiment, having the same function as a counterpart of the first embodiment described above, will be designated by the same reference numeral as that counterpart's, and description thereof will be omitted herein.

In the first embodiment described above, the plurality of specified points 31-34 agree with the plurality of measuring points of the plurality of sensors 3. However, this is only an example and should not be construed as limiting. Alternatively, at least one of the plurality of specified points 31-34 may be different from its corresponding measuring point. In this embodiment, the specified point 31 out of the plurality of specified points 31-34 agrees with the measuring point of one sensor 3, while the other specified points 32-34 are all different from any of the measuring points of the sensors 3.

First, as shown in FIG. 11A, a plurality of (e.g., four) sensors 3 are arranged on a reference plane 51. Next, the temperature distribution on the reference plane 51 is obtained by the kriging method based on the respective measured values of the sensors 3 as shown in FIG. 11B. Next, as shown in FIG. 11C, the temperature distributions in a plurality of (e.g., four) longitudinal regions 61-64 extending in the height direction from a plurality of (e.g., four) specified points 31-34 on the reference plane 51 are obtained based on the estimated temperatures obtained by the kriging method with respect to the specified points 31-34 and a function.

The function may be determined in the same way as in the first embodiment, for example. Specifically, the processing unit 2 extracts the temperature distribution in the longitudinal region 61 from the result of the simulation. This allows an estimated temperature value to be obtained with respect to each Z coordinate (height) in the longitudinal region 61. Next, the processing unit 2 approximates, by a function, the relationship between the Z coordinate and the temperature in the longitudinal region 61. In this manner, a function corresponding to the longitudinal region 61 is determined. A function corresponding to each of the other longitudinal regions 62-64 may also be determined in the same way.

The temperature distribution in the longitudinal region 61 may be obtained by overlapping the function with the estimated value obtained by the kriging method with respect to the specified point 31. In the same way, the temperature distributions in the other longitudinal regions 62-64 may be obtained by overlapping the function with the estimated values obtained by the kriging method with respect to the specified points 32-34, respectively.

Furthermore, the estimated temperatures at a plurality of (e.g., four) extended points 71-74 on the extended plane 52 parallel to the reference plane 51 are extracted from the temperature distributions in the plurality of longitudinal regions 61-64. The plurality of longitudinal regions 61-64 correspond one to one to the plurality of extended points 71-74. Each longitudinal region includes a corresponding extended point.

The temperature distribution on the extended plane 52 is obtained as shown in FIG. 11D by the kriging method based on the estimated temperatures at the four extended points 71-74. The respective temperature distributions on the reference plane 51 and the plurality of extended planes 52-55 are obtained as shown in FIG. 8 by performing such processing on the plurality of extended planes 52-55.

In a situation where the temperature distribution on the extended plane 52 is obtained by the kriging method, the closer to any of the extended points 71-74 a given point is, the more accurate the temperature estimated will be. This embodiment allows the X and Y coordinates of the specified points 31-34 to be set arbitrarily, thus allowing the X and Y coordinates of the extended points 71-74 to be set arbitrarily as well. Thus, this embodiment is applicable to, for example, a situation where a point right over a point where the temperature needs to be estimated more accurately is set to be any of the specified points 31-34.

(Third embodiment)

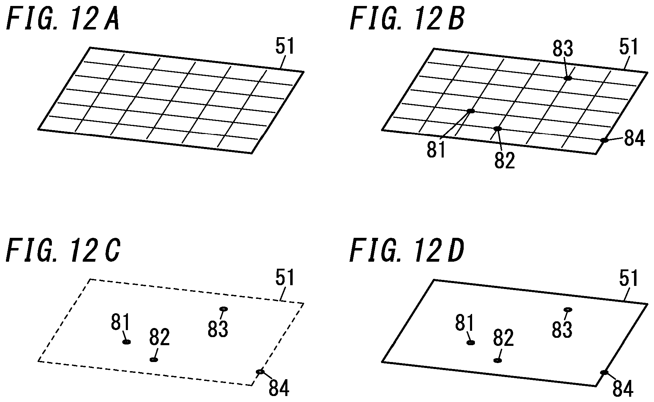

Next, an estimation method according to a third embodiment will be described with reference to FIGS. 12A-12D. In the following description, any constituent element of this third embodiment, having the same function as a counterpart of the first embodiment described above, will be designated by the same reference numeral as that counterpart's, and description thereof will be omitted herein. The third embodiment is applicable in combination with either the first embodiment or the second embodiment described above.

In this embodiment, the processing of determining the measuring points of the plurality of sensors 3 is performed differently from in the first embodiment.

The estimation method according to this embodiment includes not only the acquisition step, the kriging step, and the longitudinal extension step but also a simulation step, a trial step, and a measuring point determination step as well. The simulation step includes obtaining a first distribution of the environmental value on the reference plane 51 by making a simulation based on three-dimensional model data of a facility including the space SP1. The trial step includes obtaining a second distribution of the environmental value on the reference plane 51. The measuring point determination step includes determining the measuring point of the sensor 3.

The trial step includes a trial extraction step and a trial kriging step. The trial extraction step includes extracting the environmental values at provisionally set points 81-84 on the reference plane 51 from the distribution of the environmental value obtained in the simulation step 51 on the reference plane. The trial kriging step includes obtaining the distribution of the environmental value on the reference plane 51 by the kriging method based on the environmental values extracted in the trial extraction step. The measuring point determination step includes determining the provisionally set points 81-84 in the trial extraction step to be the measuring points when a difference between the first distribution obtained in the simulation step and the second distribution obtained in the trial step satisfies a predetermined condition.

The specifics of the simulation step are the same as in the first embodiment, and therefore, a detailed description thereof will be omitted herein.

Next, the trial extraction step will be described. As shown in FIG. 12A, the processing unit 2 divides the reference plane 51 into a grid shape. The plurality of intersections between the vertical and horizontal lines of the grid are candidate measuring points of the sensors 3. Specifically, in FIG. 12A, 49 points (= $7 \times 7$) on the reference plane 51 are candidate measuring points of the sensors 3. The trial extraction step includes determining provisionally set points and extracting the environmental value from the provisionally set points. The provisionally set points are determined at random, for example, among the plurality of (e.g., 49) candidate measuring points of the sensors 3. In FIG. 12B, four points are determined to be the provisionally set points 81-84. The processing unit 2 extracts the respective environmental values at the provisionally set points 81-84 from the distribution of the environmental value obtained in the simulation step.

This allows data about the coordinates of the provisionally set points 81-84 and the respective environmental values at the provisionally set points 81-84 to be obtained as shown in FIG. 12C. The processing unit 2 obtains, based on this data, the distribution of the environmental value on the reference plane 51 by the kriging method (which is a trial kriging step; refer to FIG. 12D). The detailed processing of the trial kriging step is the same as that of the kriging step that has already been described for the first embodiment. Specifically, the kriging step of the first embodiment includes obtaining the distribution of the environmental value on the reference plane 51 based on information about the measuring points of the plurality of sensors 3 and the measuring points of the plurality of sensors 3. On the other hand, the trial kriging step according to this embodiment includes obtaining the distribution of the environmental value on the reference plane 51 in the same procedure as in the kriging step by replacing the measuring points of the plurality of sensors 3 with the provisionally set points 81-84 and by replacing the measured values of the plurality of sensors 3 with the environmental values extracted in the trial extraction step.

As can be seen from the foregoing description, there are two types of distributions of the environmental value, namely, a distribution of the environmental value obtained in the simulation step on the reference plane 51 (i.e., the first distribution) as shown in FIG. 12A and a distribution of the environmental value obtained in the trial step on the reference plane 51 (i.e., the second distribution) as shown in FIG. 12D.

Next, the processing unit 2 calculates the difference between the first distribution and the second distribution. The difference may be calculated by, for example, the following equation (1):

$$\delta = (\Sigma \ (Si - Ki)^2)^{1/2} \qquad\qquad (1)$$

where $\delta$ is the difference, Si is the environmental value at a coordinate i which is extracted from the first distribution, and Ki is the environmental value at the coordinate i which is extracted from the second distribution. The sum of the squares of the differences between Si and Ki is calculated with respect to all coordinates on the reference plane 51.

The processing unit 2 repeatedly performs the trial step a number of times. Every time the processing unit 2 performs the trial step, the processing unit 2 resets the provisionally set points at random. As a result, multiple combinations, each consisting of the arrangement of the respective sensors 3 and $\delta$ (difference) corresponding to the arrangement, are obtained.

As described above, the measuring point determination step includes determining the provisionally set points in the trial extraction step to be the measuring points when the difference ($\delta$) between the first distribution and the second distribution satisfies a predetermined condition. As used herein, the "predetermined condition" may be, for example, that $\delta$ (difference) become minimum among multiple combinations, each consisting of the arrangement of the respective sensors 3 and $\delta$ (difference) corresponding to the arrangement. That is to say, the processing unit 2 determines the arrangement of the plurality of sensors 3 when $\delta$ (difference) becomes minimum to be the final arrangement of the plurality of sensors 3.

This embodiment allows the respective measuring points of the plurality of sensors 3 to be obtained with the results of the simulation and the results of the kriging method taken into account.

In addition, determining the arrangement (i.e., provisionally set points) of the plurality of sensors 3 at random enables shortening the time it takes to determine the arrangement of the plurality of sensors 3, compared to a situation where every possible arrangement is tried.

Note that if each sensor 3 measures a plurality of environmental values, then the processing of determining the measuring points of the plurality of sensors 3 may be performed with attention paid to only one of the plurality of environmental values. For example, if each sensor is a temperature-humidity sensor for measuring temperature and humidity, then the first distribution and the second distribution may be obtained with respect to either temperature or humidity and the arrangement of the plurality of sensors 3 may be determined based on the difference between the first distribution and the second distribution.

(Fourth embodiment)

Next, an estimation method according to a fourth embodiment will be described. In the following description, any constituent element of this fourth embodiment, having the same function as a counterpart of the first embodiment described above, will be designated by the same reference numeral as that counterpart's, and description thereof will be omitted herein. The fourth embodiment is applicable in combination with at least one of the first to third embodiments described above.

The estimation method according to this embodiment also includes the processing of obtaining the distributions of the environmental value on the reference plane 51 and in the longitudinal regions 61-64 as in the first embodiment described above. On the other hand, the estimation method according to this embodiment does not include the processing of obtaining the distributions of the environmental value on the extended planes 52-55.

For example, the processing unit 2 obtains the distribution of the environmental value on the reference plane 51 as shown in FIG. 4B and obtains the distributions of the environmental value in the longitudinal regions 61-64 as shown in FIG. 4C. The processing unit 2 may provide the distributions of the environmental value on the reference plane 51 and in the longitudinal regions 61-64 as final output.

In another example, the processing unit 2 obtains the distribution of the environmental value on the reference plane 51 as shown in FIG. 11B and obtains the distributions of the environmental value in the longitudinal regions 61-64 as shown in FIG. 11C. The processing unit 2 may provide the distributions of the environmental value on the reference plane 51 and in the longitudinal regions 61-64 as final output. Also, in FIG. 11C, the specified points 31-34 may be set irrespective of the locations of the sensors 3. Thus, the number of the specified points may be larger than the number of the sensors 3 provided. Setting a large number of specified points allows an even larger number of longitudinal regions to be set and the distributions of the environmental value to be obtained in the respective longitudinal regions. Optionally, the plurality of longitudinal regions may be allowed to occupy the entire space SP1 by setting a large number of specified points so that the distribution of the environmental value in the entire space SP1 is obtained as a result. Naturally, the distribution of the environmental value may also be obtained in only a part of the space SP1.

(Fifth embodiment)

Next, an estimation method according to a fifth embodiment will be described. In the following description, any constituent element of this fifth embodiment, having the same function as a counterpart of the first embodiment described above, will be designated by the same reference numeral as that counterpart's, and description thereof will be omitted herein. The fifth embodiment is applicable in combination with at least one of the first to fourth embodiments described above.

In this embodiment, only one function representing the variation in the environmental value in the height direction in the space SP1 is defined per space SP1. On the other hand, a plurality of longitudinal regions 61-64 are defined. Each of the plurality of the longitudinal regions 61-64 includes a corresponding specified point 31-34.

The longitudinal extension step includes obtaining the distribution of the environmental value in the height direction in each of the plurality of the longitudinal regions 61-64 based on the environmental value obtained in the kriging step with respect to a corresponding specified point and the function.

That is to say, in this embodiment, the function represents the variation in the environmental value in the height direction over the entire space SP1. The distributions of the environmental value in the longitudinal regions 61-64 are obtained using the same function in common.

For example, the function may be determined, for example, based on the distribution of the environmental value at a representative point and a pair of points over and under the representative point out of the distribution of the environmental value obtained in the simulation step over the entire space SP1. Alternatively, the1 average value of the environmental value may also be calculated, for example, on a height basis out of the distribution of the environmental value obtained in the simulation step over the entire space SP1 and the function may be determined based on the average value.

(Other variations of first to fifth embodiments)

Next, other variations of the first to fifth embodiments will be enumerated one after another. Note that the variations to be described below may be adopted in combination as appropriate.

The number of the sensors 3 provided does not have to be four but may also be one, two, three, or even five or more.

The environmental value does not have to be a temperature but may also be a humidity or the concentration of a predetermined substance. Also, each of plurality of physical quantities (such as a temperature and a humidity) may be an environmental value and the distribution of each environmental value may be obtained independently on an environmental value basis.

The reference plane 51 does not have to be the ceiling surface C1 but may also be a surface distant from the ceiling surface C1 (such as a floor surface).

Some sensors 3 may be installed on a surface different from the reference plane 51.

The measuring point of the sensor 3 does not have to be determined by the estimation method or the estimation system 1. Alternatively, the measuring point of at least some sensor 3 may be determined either in advance or by making the user operate the operating member 13, whichever is appropriate.

The function representing a variation in the environmental value in the height direction does not have to be the linear function but may also be, for example, an $N^{th}$ order (where N is a natural number) function, an exponential function, or a logarithm function.

The function representing the variation in the environmental value in the height direction may be generated by machine learning.

The function representing the variation in the environmental value in the height direction does not have to be determined by the estimation method but may have been determined in advance.

The estimation system 1 may control, based on the temperature distribution obtained by the estimation system 1 itself, equipment (such as the air conditioner A1 or a heat source) for adjusting the environmental value.

The distribution of the environmental value obtained by the estimation system 1 or the estimation method may be replaced with a different quantity and output. For example, the temperature distribution may be replaced with a sensible temperature or a predicted mean vote (PMV) and output.

The estimation system 1 according to the present disclosure or the agent that performs the estimation method according to the present disclosure includes a computer system. The computer system may include a processor and a memory as principal hardware components thereof. The computer system performs at least some functions of the estimation system 1 according to the present disclosure or serves as the agent that performs the estimation method according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, in the embodiment described above, the plurality of functions of the estimation system 1 are aggregated in a single device. However, this is not an essential configuration for the estimation system 1. Alternatively, those constituent elements of the estimation system 1 may be distributed in multiple devices. For example, a device including the operating member 13 may be provided separately from a device including the processing unit 2. In addition, a device including the display device 14 may be provided separately from the device including the processing unit 2.

Still alternatively, at least some functions of the estimation system 1 (e.g., at least some functions of the kriger 22) may be implemented as a server or a cloud computing system as well.

(Recapitulation)

The exemplary embodiments and their variations described above are specific implementations of the following aspects of the present disclosure.

An estimation method according to a first aspect is a method for estimating a distribution of an environmental value in at least a partial region of a space (SP1). The environmental value is at least one selected from the group consisting of: a temperature; a humidity; and a concentration of a predetermined substance. The estimation method includes an acquisition step, a kriging step, and a longitudinal extension step. The acquisition step includes acquiring a measured value of the environmental value which has been measured by a sensor (3) at a measuring point in the space (SP1). The kriging step includes obtaining a distribution of the environmental value on a reference plane (51) by kriging method based on the measured value of the environmental value at the measuring point. The reference plane (51) intersects with a height direction of the space (SP1) and includes the measuring point of the sensor (3). The longitudinal extension step includes obtaining a distribution of the environmental value in the height direction in a longitudinal region (61) based on the environmental value obtained in the kriging step with respect to a specified point (31) on the reference plane (51) and a function representing a variation in the environmental value in the height direction. The longitudinal region (61) includes the specified point (31) on the reference plane (51) and extends in the height direction.

This method allows the distribution of the environmental value in the longitudinal region (61) to be obtained in the longitudinal extension step. This may reduce the number of sensors (3) required compared to a situation where multiple sensors (3) are installed in a single longitudinal region (61).

An estimation method according to a second aspect, which may be implemented in conjunction with the first aspect, further includes an estimation step including an extraction step and an extended kriging step. The extraction step includes extracting the environmental value at an extended point (71) from the distribution of the environmental value, obtained in the longitudinal extension step, in the height direction in the longitudinal region (61). The extended point (71) is included in an extended plane (52) parallel to the reference plane (51). The extended point (71) and the specified point (31) are arranged in the height direction. The extended kriging step includes obtaining a distribution of the environmental value on the extended plane (52) by the kriging method based on the environmental value extracted in the extraction step. A plurality of the extended planes (52-55) are defined. The estimation step includes obtaining the distribution of the environmental value on each of the plurality of extended planes (52-55) by performing the extraction step and the extended kriging step with respect to each of the plurality of extended planes (52-55).

This method enables obtaining the distribution of the environmental value in a broader range than in the first aspect without increasing the number of sensors (3) required.

In an estimation method according to a third aspect, which may be implemented in conjunction with the first or second aspect, the specified point (31) agrees with the measuring point of the sensor (3).

This method enables obtaining the distributions of the environmental value in regions over and under the sensor (3).

An estimation method according to a fourth aspect, which may be implemented in conjunction with any one of the first to third aspects, further includes a simulation step and a measuring point determination step. The simulation step includes obtaining the distribution of the environmental value on the reference plane (51) by making a simulation based on three-dimensional model data of a facility including the space (SP1). The measuring point determination step includes determining at least one point, which is included in the reference plane (51) and at which the environmental value reaches either a local maximum or a local minimum on the reference plane (51) according to the simulation, to be the measuring point of the sensor (3).

This method enables obtaining the distribution of the environmental value accurately by the kriging method.

An estimation method according to a fifth aspect, which may be implemented in conjunction with any one of the first to third aspects, further includes a simulation step, a trial step, and a measuring point determination step. The simulation step includes obtaining a first distribution of the environmental value on the reference plane (51) by making a simulation based on three-dimensional model data of a facility including the space (SP1). The trial step includes obtaining a second distribution of the environmental value on the reference plane (51). The measuring point determination step includes determining the measuring point of the sensor (3). The trial step includes a trial extraction step and a trial kriging step. The trial extraction step includes extracting the environmental value at a provisionally set point (81) on the reference plane (51) from the distribution of the environmental value obtained in the simulation step on the reference plane (51). The trial kriging step includes obtaining the distribution of the environmental value on the reference plane (51) by the kriging method based on the environmental value extracted in the trial extraction step. The measuring point determination step includes determining the provisionally set point (81) in the trial extraction step to be the measuring point when a difference between the first distribution obtained in the simulation step and the second distribution obtained in the trial step satisfies a predetermined condition.

This method allows the arrangement of the sensors (3) to be determined based on the difference between the environmental value obtained by the simulation and the environmental value obtained by the kriging method (e.g., to make the difference relatively small).

In an estimation method according to a sixth aspect, which may be implemented in conjunction with any one of the first to fifth aspects, at least the temperature is selected as the environmental value from the group consisting of the temperature, the humidity, and the concentration of the predetermined substance. The simulation step includes obtaining the distribution of the temperature on the reference plane (51) by making a simulation based on the three-dimensional model data and information about a temperature at an air outlet of an air conditioner (A1) for air-conditioning the space (SP1).

This method allows the simulation to be made more accurately.

In an estimation method according to a seventh aspect, which may be implemented in conjunction with any one of the first to sixth aspects, the simulation step includes obtaining the distribution of the environmental value in the space (SP1) having a length in the height direction. The estimation method further includes a function determination step. The function determination step includes determining the function based on the distribution of the environmental value obtained in the simulation step for the space (SP1).

This method allows the function to be determined according to an actual status of the space (SP1) created based on three-dimensional model data, for example.

In an estimation method according to an eighth aspect, which may be implemented in conjunction with any one of the first to seventh aspects, a plurality of the functions, each representing the variation in the environmental value in the height direction in the space (SP1), are defined. The plurality of the functions correspond one to one to a plurality of the longitudinal regions (61-64). Each of the plurality of the longitudinal regions (61-64) includes a corresponding specified point (31-34). The longitudinal extension step includes obtaining the distribution of the environmental value in the height direction in each of the plurality of the longitudinal regions (61-64) based on the environmental value obtained in the kriging step with respect to the corresponding specified point (31-34) and a corresponding one of the plurality of the functions.

This method allows an appropriate function to be selected on a point-by-point basis.

In an estimation method according to a ninth aspect, which may be implemented in conjunction with any one of the first to seventh aspects, the function representing the variation in the environmental value in the height direction in the space (SP1) is defined one to one with respect to the space (SP1). A plurality of the longitudinal regions (61-64) are defined. Each of the plurality of the longitudinal regions (61-64) includes a corresponding specified point (31-34). The longitudinal extension step includes obtaining the distribution of the environmental value in the height direction in each of the plurality of the longitudinal regions (61-64) based on the environmental value obtained in the kriging step with respect to the corresponding specified point (31-34) and the function.

This method allows the same function to be used in common.

In an estimation method according to a tenth aspect, which may be implemented in conjunction with any one of the first to ninth aspects, the function is a linear function.

This method allows the distribution of the environmental value in the longitudinal region (61) to be obtained accurately.

In an estimation method according to an eleventh aspect, which may be implemented in conjunction with any one of the first to tenth aspects, the space (SP1) includes a ceiling surface (C1). The reference plane (51) is the ceiling surface (C1).

According to this method, the sensor (3) is installed in the vicinity of the ceiling surface (C1), thus reducing the chances of the sensor (3) collecting foreign particles such as dust. In addition, this also reduces the chances of the sensor (3) constituting an obstacle for a person present in the space (SP1).

In an estimation method according to a twelfth aspect, which may be implemented in conjunction with any one of the first to eleventh aspects, a plurality of the sensors (3) are provided on the reference plane (51).

This method allows the distribution of the environmental value to be obtained more accurately.

Note that the features according to the second to twelfth aspects are not essential features for the estimation method but may be omitted as appropriate.

A program according to a thirteenth aspect is designed to cause one or more processors of a computer system to perform the estimation method according to any one of the first to twelfth aspects.

This program may reduce the number of sensors (3) required to estimate the distribution of the environmental value.

An estimation system (1) according to a fourteenth aspect estimates a distribution of an environmental value in at least a partial region of a space (SP1). The environmental value is at least one selected from the group consisting of: a temperature; a humidity; and a concentration of a predetermined substance. The estimation system (1) includes an acquirer (21), a kriger (22), and a longitudinal extender (23). The acquirer (21) acquires a measured value of the environmental value which has been measured by a sensor (3) at a measuring point in the space (SP1). The kriger (22) obtains a distribution of the environmental value on a reference plane (51) by kriging method based on the measured value of the environmental value at the measuring point. The reference plane (51) intersects with a height direction of the space (SP1) and includes the measuring point of the sensor (3). The longitudinal extender (23) obtains a distribution of the environmental value in the height direction in a longitudinal region (61) based on the environmental value obtained by the kriger (22) with respect to a specified point (31) on the reference plane (51) and a function representing a variation in the environmental value in the height direction. The longitudinal region (61) includes the specified point (31) on the reference plane (51) and extends in the height direction.

This configuration may reduce the number of sensors (3) required to estimate the distribution of the environmental value.

Note that these are not the only aspects of the present disclosure but various configurations (including variations) of the estimation system (1) according to the exemplary embodiments described above may also be implemented as, for example, an estimation method, a (computer) program, or a non-transitory storage medium on which the program is stored.

**Reference Signs List**

| | |
|---|---|
| 1 | Estimation System |
| 3 | Sensor |
| 21 | Acquirer |
| 22 | Kriger |
| 23 | Longitudinal Extender |
| 31-34 | Specified Point |
| 51 | Reference Plane |
| 52-55 | Extended Plane |
| 61-64 | Longitudinal Region |
| 71-74 | Extended Point |
| 81-84 | Provisionally Set Point |
| A1 | Air Conditioner |
| C1 | Ceiling Surface |
| SP1 | Space |

**Claims**

1. A computer-implemented estimation method for estimating a distribution of an environmental value in at least a partial region of a space (SP1), the environmental value being at least one selected from the group consisting of: a temperature; a humidity; and a concentration of a predetermined substance, the estimation method comprising:

   an acquisition step including acquiring a measured value of the environmental value at a measuring point in the space (SP1), the measured value having been measured by a sensor (3);
   **characterized by** further comprising
   a kriging step including obtaining a distribution of the environmental value on a reference plane (51) by kriging method based on the measured value of the environmental value at the measuring point, the reference plane (51) intersecting with a height direction of the space (SP1) and including the measuring point of the sensor (3); and a longitudinal extension step including obtaining a distribution of the environmental value in the height direction in a longitudinal region (61) based on the environmental value obtained in the kriging step with respect to a specified point (31) on the reference plane (51) and a function representing a variation in the environmental value in the height direction, the longitudinal region (61) including the specified point (31) on the reference plane (51) and extending in the height direction.

2. The estimation method of claim 1, further comprising an estimation step including an extraction step and an extended kriging step,

the extraction step including extracting the environmental value at an extended point (71) from the distribution of the environmental value, obtained in the longitudinal extension step, in the height direction in the longitudinal region (61), the extended point (71) being included in an extended plane (52) parallel to the reference plane (51), the extended point (71) and the specified point (31) being arranged in the height direction, the extended kriging step including obtaining a distribution of the environmental value on the extended plane (52) by the kriging method based on the environmental value extracted in the extraction step, wherein a plurality of the extended planes (52-55) are defined, and the estimation step includes obtaining the distribution of the environmental value on each of the plurality of extended planes (52-55) by performing the extraction step and the extended kriging step with respect to each of the plurality of extended planes (52-55).

3. The estimation method of claim 1 or 2, wherein the specified point (31) agrees with the measuring point of the sensor (3).

4. The estimation method of claim 1, further comprising:

a simulation step including obtaining the distribution of the environmental value on the reference plane (51) by making a simulation based on three-dimensional model data of a facility including the space (SP1); and a measuring point determination step including determining at least one point to be the measuring point of the sensor (3), the at least one point being included in the reference plane (51), the environmental value reaching, at the at least one point, either a local maximum or a local minimum on the reference plane (51) according to the simulation.

5. The estimation method of claim 1, further comprising:

a simulation step including obtaining a first distribution of the environmental value on the reference plane (51) by making a simulation based on three-dimensional model data of a facility including the space (SP1); a trial step including obtaining a second distribution of the environmental value on the reference plane (51); and a measuring point determination step including determining the measuring point of the sensor (3), wherein the trial step includes:

a trial extraction step including extracting the environmental value at a provisionally set point (81) on the reference plane (51) from the distribution of the environmental value obtained in the simulation step on the reference plane (51); and a trial kriging step including obtaining the distribution of the environmental value on the reference plane (51) by the kriging method based on the environmental value extracted in the trial extraction step, and the measuring point determination step includes determining the provisionally set point (81) in the trial extraction step to be the measuring point when a difference between the first distribution obtained in the simulation step and the second distribution obtained in the trial step satisfies a predetermined condition.

6. The estimation method of claim 4 or 5, wherein

at least the temperature is selected as the environmental value from the group consisting of the temperature, the humidity, and the concentration of the predetermined substance, and the simulation step includes obtaining the distribution of the temperature on the reference plane (51) by making a simulation based on the three-dimensional model data and information about a temperature at an air outlet of an air conditioner (A1) configured to air-condition the space (SP1).

7. The estimation method of claim 4 or 5, wherein

the simulation step includes obtaining the distribution of the environmental value in the space (SP1) having a length in the height direction, and

the estimation method further comprises a function determination step including determining the function based on the distribution of the environmental value obtained in the simulation step for the space (SP1).

8. The estimation method of claim 1, wherein

a plurality of the functions, each representing the variation in the environmental value in the height direction in the space (SP1), are defined,

the plurality of the functions correspond one to one to a plurality of the longitudinal regions (61-64),

each of the plurality of the longitudinal regions (61-64) includes a corresponding specified point (31-34), and

the longitudinal extension step includes obtaining the distribution of the environmental value in the height direction in each of the plurality of the longitudinal regions (61-64) based on the environmental value obtained in the kriging step with respect to the corresponding specified point (31-34) and a corresponding one of the plurality of the functions.

9. The estimation method of claim 1, wherein

the function representing the variation in the environmental value in the height direction in the space (SP1) is defined one to one with respect to the space (SP1),

a plurality of the longitudinal regions (61-64) are defined,

each of the plurality of the longitudinal regions (61-64) includes a corresponding specified point (31-34), and

the longitudinal extension step includes obtaining the distribution of the environmental value in the height direction in each of the plurality of the longitudinal regions (61-64) based on the environmental value obtained in the kriging step with respect to the corresponding specified point (31-34) and the function.

10. The estimation method of claim 1, wherein
the function is a linear function.

11. The estimation method of claim 1, wherein

the space (SP1) includes a ceiling surface (C1), and
the reference plane (51) is the ceiling surface (C1).

12. The estimation method of claim 1, wherein
a plurality of the sensors (3) are provided on the reference plane (51).

13. A computer program designed to cause one or more processors of a computer system to perform the estimation method of claim 1.

14. An estimation system (1) configured to estimate a distribution of an environmental value in at least a partial region of a space (SP1), the environmental value being at least one selected from the group consisting of: a temperature; a humidity; and a concentration of a predetermined substance, the estimation system (1) comprising:

an acquirer (21) configured to acquire a measured value of the environmental value at a measuring point in the space (SP1), the measured value having been measured by a sensor (3);

**characterized by** further comprising

a kriger (22) configured to obtain a distribution of the environmental value on a reference plane (51) by kriging method based on the measured value of the environmental value at the measuring point, the reference plane (51) intersecting with a height direction of the space (SP1) and including the measuring point of the sensor (3); and

a longitudinal extender (23) configured to obtain a distribution of the environmental value in the height direction in a longitudinal region (61) based on the environmental value obtained by the kriger (22) with respect to a specified point (31) on the reference plane (51) and a function representing a variation in the environmental value in the height direction, the longitudinal region (61) including the specified point (31) on the reference plane (51) and extending in the height direction.

**Patentansprüche**

1. Computerimplementiertes Schätzverfahren zum Schätzen einer Verteilung eines Umgebungswerts in mindestens einem Teilbereich eines Raums (SP1), wobei der Umgebungswert mindestens einer ist, der aus der Gruppe, bestehend aus: einer Temperatur; einer Feuchtigkeit; und einer Konzentration einer vorbestimmten Substanz, ausgewählt wird, wobei das Schätzverfahren umfasst:

   einen Erfassungsschritt, der ein Erfassen eines Messwerts des Umgebungswerts an einem Messpunkt in dem Raum (SP1) umfasst, wobei der Messwert durch einen Sensor (3) gemessen wurde;
   gekennzeichnet ferner durch
   einen Kriging-Schritt, der ein Ermitteln einer Verteilung des Umgebungswerts auf einer Referenzebene (51) durch ein Kriging-Verfahren auf der Grundlage des Messwerts des Umgebungswerts an dem Messpunkt umfasst, wobei die Referenzebene (51) eine Höhenrichtung des Raums (SP1) schneidet und den Messpunkt des Sensors (3) aufweist; und
   einen Längserweiterungsschritt, der ein Ermitteln einer Verteilung des Umgebungswerts in der Höhenrichtung in einem Längsbereich (61) auf der Grundlage des in dem Kriging-Schritt ermittelten Umgebungswerts in Bezug auf einen festgelegten Punkt (31) auf der Referenzebene (51) und einer Funktion, die eine Variation des Umgebungswerts in der Höhenrichtung darstellt, umfasst, wobei der Längsbereich (61) den festgelegten Punkt (31) auf der Referenzebene (51) aufweist und sich in der Höhenrichtung erstreckt.

2. Schätzverfahren nach Anspruch 1, ferner einen Schätzschritt umfassend, der einen Extraktionsschritt und einen erweiterten Kriging-Schritt umfasst,

   wobei der Extraktionsschritt ein Extrahieren des Umgebungswerts an einem erweiterten Punkt (71) aus der Verteilung des Umgebungswerts umfasst, der in dem Längserweiterungsschritt in der Höhenrichtung in dem Längsbereich (61) ermittelt wurde, wobei der erweiterte Punkt (71) in einer erweiterten Ebene (52) parallel zu der Referenzebene (51) enthalten ist, wobei der erweiterte Punkt (71) und der festgelegte Punkt (31) in der Höhenrichtung angeordnet sind,
   wobei der erweiterte Kriging-Schritt ein Ermitteln einer Verteilung des Umgebungswerts auf der erweiterten Ebene (52) durch das Kriging-Verfahren auf der Grundlage des in dem Extraktionsschritt extrahierten Umgebungswerts aufweist, wobei
   mehrere der erweiterten Ebenen (52-55) definiert werden und
   der Schätzschritt ein Ermitteln der Verteilung des Umgebungswerts auf jeder der mehreren erweiterten Ebenen (52-55) durch ein Durchführen des Extraktionsschritts und des erweiterten Kriging-Schritts in Bezug auf jede der mehreren erweiterten Ebenen (52-55) umfasst.

3. Schätzverfahren nach Anspruch 1 oder 2, wobei
   der festgelegte Punkt (31) mit dem Messpunkt des Sensors (3) übereinstimmt.

4. Schätzverfahren nach Anspruch 1, ferner umfassend:

   einen Simulationsschritt, der ein Ermitteln der Verteilung des Umgebungswerts auf der Referenzebene (51) durch ein Durchführen einer Simulation auf der Grundlage dreidimensionaler Modelldaten einer Anlage, die den Raum (SP1) enthält, umfasst; und
   einen Messpunktbestimmungsschritt, der ein Bestimmen mindestens eines Punktes als Messpunkt des Sensors (3) umfasst, wobei der mindestens eine Punkt in der Referenzebene (51) enthalten ist und der Umgebungswert an dem mindestens einen Punkt gemäß der Simulation entweder ein lokales Maximum oder ein lokales Minimum auf der Referenzebene (51) erreicht.

5. Schätzverfahren nach Anspruch 1, ferner umfassend:

   einen Simulationsschritt, der ein Ermitteln einer ersten Verteilung des Umgebungswerts auf der Referenzebene (51) durch ein Durchführen einer Simulation auf der Grundlage dreidimensionaler Modelldaten einer Anlage, die den Raum (SP1) enthält, umfasst;
   einen Testschritt, der ein Ermitteln einer zweiten Verteilung des Umgebungswerts auf der Referenzebene (51) umfasst; und
   einen Messpunktbestimmungsschritt, der ein Bestimmen des Messpunkts des Sensors (3) umfasst, wobei der Testschritt umfasst:

einen Test-Extraktionsschritt, der ein Extrahieren des Umgebungswerts an einem vorläufig eingestellten Punkt (81) auf der Referenzebene (51) aus der in dem Simulationsschritt ermittelten Verteilung des Umgebungswerts auf der Referenzebene (51) umfasst; und

einen Test-Kriging-Schritt, der ein Ermitteln der Verteilung des Umgebungswerts auf der Referenzebene (51) durch das Kriging-Verfahren auf der Grundlage des in dem Test-Extraktionsschritt extrahierten Umgebungswerts umfasst, und

der Messpunktbestimmungsschritt ein Bestimmen des vorläufig eingestellten Punkts (81) in dem Test-Extraktionsschritt als Messpunkt umfasst, wenn eine Differenz zwischen der in dem Simulationsschritt ermittelten ersten Verteilung und der in dem Testschritt ermittelten zweiten Verteilung eine vorbestimmte Bedingung erfüllt.

6. Schätzverfahren nach Anspruch 4 oder 5, wobei

mindestens die Temperatur als der Umgebungswert aus der Gruppe, die aus der Temperatur, der Feuchtigkeit und der Konzentration der vorbestimmten Substanz besteht, ausgewählt wird und

der Simulationsschritt ein Ermitteln der Verteilung der Temperatur auf der Referenzebene (51) durch Durchführen einer Simulation auf der Grundlage der dreidimensionalen Modelldaten und von Informationen über eine Temperatur an einem Luftauslass einer Klimaanlage (A1), die zum Klimatisieren des Raums (SP1) konfiguriert ist, umfasst.

7. Schätzverfahren nach Anspruch 4 oder 5, wobei

der Simulationsschritt ein Ermitteln der Verteilung des Umgebungswerts in dem Raum (SP1) mit einer Länge in der Höhenrichtung umfasst und

das Schätzverfahren ferner einen Funktionsbestimmungsschritt umfasst, der ein Bestimmen der Funktion auf der Grundlage der in dem Simulationsschritt für den Raum (SP1) ermittelten Verteilung des Umgebungswerts umfasst.

8. Schätzverfahren nach Anspruch 1, wobei

mehrere Funktionen definiert werden, die jeweils die Variation des Umgebungswerts in der Höhenrichtung in dem Raum (SP1) darstellen,

die mehreren Funktionen mehreren Längsbereichen (61-64) eins-zu-eins entsprechen,

jeder der mehreren Längsbereiche (61-64) einen entsprechenden festgelegten Punkt (31-34) aufweist und

der Längserweiterungsschritt ein Ermitteln der Verteilung des Umgebungswerts in der Höhenrichtung in jedem der mehreren Längsbereiche (61-64) auf der Grundlage des in dem Kriging-Schritt in Bezug auf den entsprechenden festgelegten Punkt (31-34) ermittelten Umgebungswerts und einer entsprechenden der mehreren Funktionen umfasst.

9. Schätzverfahren nach Anspruch 1, wobei

die Funktion, die die Variation des Umgebungswerts in der Höhenrichtung in dem Raum (SP1) darstellt, in Bezug auf den Raum (SP1) eins-zu-eins definiert wird,

mehrere Längsbereiche (61-64) definiert werden,

jeder der mehreren Längsbereiche (61-64) einen entsprechenden festgelegten Punkt (31-34) aufweist und

der Längserweiterungsschritt ein Ermitteln der Verteilung des Umgebungswerts in der Höhenrichtung in jedem der mehreren Längsbereiche (61-64) auf der Grundlage des in dem Kriging-Schritt in Bezug auf den entsprechenden festgelegten Punkt (31-34) ermittelten Umgebungswerts und der Funktion umfasst.

10. Schätzverfahren nach Anspruch 1, wobei die Funktion eine lineare Funktion ist.

11. Schätzverfahren nach Anspruch 1, wobei

der Raum (SP1) eine Deckenfläche (C1) aufweist und

die Referenzebene (51) die Deckenfläche (C1) ist.

12. Schätzverfahren nach Anspruch 1, wobei

mehrere der Sensoren (3) auf der Referenzebene (51) vorgesehen ist.

13. Computerprogramm, das dafür ausgelegt ist, einen oder mehrere Prozessoren eines Computersystems zu veranlassen, das Schätzverfahren nach Anspruch 1 durchzuführen.

14. Schätzsystem (1), das konfiguriert ist, um eine Verteilung eines Umgebungswerts in mindestens einem Teilbereich eines Raums (SP1) zu schätzen, wobei der Umgebungswert mindestens einer ist, der aus der Gruppe, bestehend aus: einer Temperatur; einer Feuchtigkeit; und einer Konzentration einer vorbestimmten Substanz, ausgewählt ist, wobei das Schätzsystem (1) aufweist:

einen Erfasser (21), der konfiguriert ist, um einen Messwert des Umgebungswerts an einem Messpunkt in dem Raum (SP1) zu erfassen, wobei der Messwert von einem Sensor (3) gemessen wurde; gekennzeichnet ferner durch
einen Krigierer (22), der konfiguriert ist, um eine Verteilung des Umgebungswerts auf einer Referenzebene (51) durch ein Kriging-Verfahren auf der Grundlage des Messwerts des Umgebungswerts an dem Messpunkt zu ermitteln, wobei die Referenzebene (51) eine Höhenrichtung des Raums (SP1) schneidet und den Messpunkt des Sensors (3) aufweist; und
einen Längsverlängerer (23), der konfiguriert ist, um eine Verteilung des Umgebungswerts in der Höhenrichtung in einem Längsbereich (61) auf der Grundlage des von dem Krigierer (22) in Bezug auf einen festgelegten Punkt (31) auf der Referenzebene (51) ermittelten Umgebungswerts und einer Funktion, die eine Variation des Umgebungswerts in der Höhenrichtung darstellt, zu ermitteln, wobei der Längsbereich (61) den festgelegten Punkt (31) auf der Referenzebene (51) aufweist und sich in der Höhenrichtung erstreckt.

## Revendications

1. Procédé d'estimation mis en œuvre par ordinateur pour estimer une distribution de la valeur environnementale dans au moins une région partielle d'un espace (SP1), la valeur environnementale étant au moins l'une sélectionnée dans le groupe constitué de : une température ; une humidité ; et une concentration d'une substance prédéterminée, le procédé d'estimation comprenant :

une étape d'acquisition comprenant l'acquisition d'une valeur mesurée de la valeur environnementale en un point de mesure dans l'espace (SP1), la valeur mesurée ayant été mesurée par un capteur (3) ;
**caractérisé en ce qu'**il comprend en outre
une étape de krigeage comprenant l'obtention d'une distribution de la valeur environnementale sur un plan de référence (51) par une méthode de krigeage basée sur la valeur mesurée de la valeur environnementale au point de mesure, le plan de référence (51) croisant une direction de la hauteur de l'espace (SP1) et comprenant le point de mesure du capteur (3) ; et
une étape d'extension longitudinale comprenant l'obtention d'une distribution de la valeur environnementale dans la direction de la hauteur dans une région longitudinale (61) sur la base de la valeur environnementale obtenue lors de l'étape de krigeage par rapport à un point spécifié (31) sur le plan de référence (51) et d'une fonction représentant une variation de la valeur environnementale dans la direction de la hauteur, la région longitudinale (61) comprenant le point spécifié (31) sur le plan de référence (51) et s'étendant dans la direction de la hauteur.

2. Procédé d'estimation selon la revendication 1, comprenant en outre une étape d'estimation comprenant une étape d'extraction et une étape de krigeage étendue,

l'étape d'extraction comprenant l'extraction de la valeur environnementale en un point étendu (71) à partir de la distribution de la valeur environnementale, obtenue lors de l'étape d'extension longitudinale, dans la direction de la hauteur dans la région longitudinale (61), le point étendu (71) étant inclus dans un plan étendu (52) parallèle au plan de référence (51), le point étendu (71) et le point spécifié (31) étant disposés dans la direction de la hauteur,
l'étape de krigeage étendue comprenant l'obtention d'une distribution de la valeur environnementale sur le plan étendu (52) par la méthode de krigeage basée sur la valeur environnementale extraite lors de l'étape d'extraction, lequel
une pluralité de plans étendus (52-55) sont définis, et l'étape d'estimation comprend l'obtention de la distribution de la valeur environnementale sur chacun de la pluralité de plans étendus (52-55) en effectuant l'étape d'extraction et l'étape de krigeage étendue pour chacun de la pluralité de plans étendus (52-55).

3. Procédé d'estimation selon l'une quelconque des revendications 1 ou 2, dans lequel

le point spécifié (31) coïncide avec le point de mesure du capteur (3).

4. Procédé d'estimation selon la revendication 1, comprenant en outre :

une étape de simulation comprenant l'obtention de la distribution de la valeur environnementale sur le plan de référence (51) en réalisant une simulation basée sur des données de modèle tridimensionnel d'une installation comprenant l'espace (SP1) ; et
une étape de détermination du point de mesure comprenant la détermination d'au moins un point devant être le point de mesure du capteur (3), ledit au moins un point étant inclus dans le plan de référence (51), la valeur environnementale atteignant, audit au moins un point, soit un maximum local, soit un minimum local sur le plan de référence (51) selon la simulation.

5. Procédé d'estimation selon la revendication 1, comprenant en outre :

une étape de simulation comprenant l'obtention d'une première distribution de la valeur environnementale sur le plan de référence (51) en réalisant une simulation basée sur des données de modèle tridimensionnel d'une installation comprenant l'espace (SP1) ;
une étape d'essai comprenant l'obtention d'une seconde distribution de la valeur environnementale sur le plan de référence (51) ; et
une étape de détermination du point de mesure comprenant la détermination du point de mesure du capteur (3), lequel
l'étape d'essai comprend :

une étape d'extraction d'essai comprenant l'extraction de la valeur environnementale en un point provisoirement défini (81) sur le plan de référence (51) à partir de la distribution de la valeur environnementale obtenue lors de l'étape de simulation sur le plan de référence (51) ; et
une étape de krigeage d'essai comprenant l'obtention de la distribution de la valeur environnementale sur le plan de référence (51) par la méthode de krigeage basée sur la valeur environnementale extraite lors de l'étape d'extraction d'essai, et
l'étape de détermination du point de mesure comprend la détermination du point provisoirement défini (81) lors de l'étape d'extraction d'essai comme étant le point de mesure lorsqu'une différence entre la première distribution obtenue lors de l'étape de simulation et la seconde distribution obtenue lors de l'étape d'essai satisfait une condition prédéterminée.

6. Procédé d'estimation selon l'une quelconque des revendications 4 ou 5, dans lequel

au moins la température est sélectionnée comme valeur environnementale dans le groupe constitué de la température, de l'humidité et de la concentration de la substance prédéterminée, et
l'étape de simulation comprend l'obtention de la distribution de la température sur le plan de référence (51) en réalisant une simulation basée sur les données de modèle tridimensionnel et des informations concernant une température à une sortie d'air d'un climatiseur (A1) configuré pour climatiser l'espace (SP1).

7. Procédé d'estimation selon l'une quelconque des revendications 4 ou 5, dans lequel

l'étape de simulation comprend l'obtention de la distribution de la valeur environnementale dans l'espace (SP1) ayant une longueur dans la direction de la hauteur, et
le procédé d'estimation comprend en outre une étape de détermination de la fonction comprenant la détermination de la fonction sur la base de la distribution de la valeur environnementale obtenue lors de l'étape de simulation pour l'espace (SP1).

8. Procédé d'estimation selon la revendication 1, dans lequel

une pluralité de fonctions, chacune représentant la variation de la valeur environnementale dans la direction de la hauteur dans l'espace (SP1), sont définies,
la pluralité de fonctions correspond un à un à une pluralité de régions longitudinales (61-64), chacune de la pluralité de régions longitudinales (61-64) comprend un point spécifié correspondant (31-34), et
l'étape d'extension longitudinale comprend l'obtention de la distribution de la valeur environnementale dans la direction de la hauteur dans chacune de la pluralité de régions longitudinales (61-64) sur la base de la valeur environnementale obtenue lors de l'étape de krigeage par rapport au point spécifié correspondant (31-34) et à l'une des fonctions correspondantes de la pluralité de fonctions.

9.  Procédé d'estimation selon la revendication 1, dans lequel

    la fonction représentant la variation de la valeur environnementale dans la direction de la hauteur dans l'espace (SP1) est définie un à un par rapport à l'espace (SP1),
    une pluralité de régions longitudinales (61-64) sont définies,
    chacune de la pluralité de régions longitudinales (61-64) comprend un point spécifié correspondant (31-34), et
    l'étape d'extension longitudinale comprend l'obtention de la distribution de la valeur environnementale dans la direction de la hauteur dans chacune de la pluralité de régions longitudinales (61-64) sur la base de la valeur environnementale obtenue lors de l'étape de krigeage par rapport au point spécifié correspondant (31-34) et à la fonction.

10. Procédé d'estimation selon la revendication 1, dans lequel
    la fonction est une fonction linéaire.

11. Procédé d'estimation selon la revendication 1,

    dans lequel l'espace (SP1) comprend une surface de plafond (C1), et
    le plan de référence (51) est la surface de plafond (C1).

12. Procédé d'estimation selon la revendication 1, dans lequel
    une pluralité de capteurs (3) sont disposés sur le plan de référence (51).

13. Programme informatique conçu pour amener un ou plusieurs processeurs d'un système informatique à exécuter le procédé d'estimation selon la revendication 1.

14. Système d'estimation (1) configuré pour estimer une distribution d'une valeur environnementale dans au moins une région partielle d'un espace (SP1), la valeur environnementale étant au moins l'une sélectionnée dans le groupe constitué de : une température ; une humidité ; et une concentration d'une substance prédéterminée, le système d'estimation (1) comprenant :

    un dispositif d'acquisition (21) configuré pour acquérir une valeur mesurée de la valeur environnementale en un point de mesure dans l'espace (SP1), la valeur mesurée ayant été mesurée par un capteur (3) ;
    **caractérisé en ce qu'**il comprend en outre
    un dispositif de krigeage (22) configuré pour obtenir une distribution de la valeur environnementale sur un plan de référence (51) par une méthode de krigeage basée sur la valeur mesurée de la valeur environnementale au point de mesure, le plan de référence (51) croisant une direction de la hauteur de l'espace (SP1) et comprenant le point de mesure du capteur (3) ; et
    un dispositif d'extension longitudinale (23) configuré pour obtenir une distribution de la valeur environnementale dans la direction de la hauteur dans une région longitudinale (61) sur la base de la valeur environnementale obtenue par le dispositif de krigeage (22) par rapport à un point spécifié (31) sur le plan de référence (51) et d'une fonction représentant une variation de la valeur environnementale dans la direction de la hauteur, la région longitudinale (61) comprenant le point spécifié (31) sur le plan de référence (51) et s'étendant dans la direction de la hauteur.

## FIG. 1

```
                    ┌──────────────┐
                    │    START     │
                    └──────┬───────┘
  ST1                      ↓
        ┌──────────────────────────────────┐
        │      Set simulation condition     │
        └──────────────────┬───────────────┘
  ST2                      ↓
        ┌──────────────────────────────────┐
        │        Perform simulation         │
        └──────────────────┬───────────────┘
  ST3                      ↓
        ┌──────────────────────────────────┐
        │ Locate coordinates where temperature │
        │ reaches local maximum or local minimum │
        └──────────────────┬───────────────┘
  ST4                      ↓
        ┌──────────────────────────────────┐
        │          Arrange sensors          │
        └──────────────────┬───────────────┘
  ST5                      ↓
        ┌──────────────────────────────────┐
        │   Acquire measured values of sensors   │
        └──────────────────┬───────────────┘
  ST6                      ↓
        ┌──────────────────────────────────┐
        │   Obtain temperature distribution on   │
        │   reference plane by kriging method    │
        └──────────────────┬───────────────┘
  ST7                      ↓
        ┌──────────────────────────────────┐
        │      Correct result of simulation     │
        └──────────────────┬───────────────┘
  ST8                      ↓
        ┌──────────────────────────────────┐
        │      Determine function based on      │
        │        result of simulation           │
        └──────────────────┬───────────────┘
  ST9                      ↓
        ┌──────────────────────────────────┐
        │  Obtain temperature distributions in   │
        │        longitudinal regions           │
        └──────────────────┬───────────────┘
                           ↓  ←──────────────┐
  ST10                     ↓                 │
        ┌──────────────────────────────────┐ │
        │        Select extended planes     │ │
        └──────────────────┬───────────────┘ │
  ST11                     ↓                 │
        ┌──────────────────────────────────┐ │
        │   Obtain temperature distribution on   │ │
        │    extended plane by kriging method   │ │
        └──────────────────┬───────────────┘ │
  ST12                     ↓                 │
            ◇─────────────────────────◇  No  │
             Is end condition satisfied? ────┘
            ◇─────────────────────────◇
  ST13                     ↓ Yes
        ┌──────────────────────────────────┐
        │     Display temperature distribution   │
        └──────────────────┬───────────────┘
                           ↓
                    ┌──────────────┐
                    │     END      │
                    └──────────────┘
```

FIG. 2

```
                    ┌─────────────┐
                    │    START    │
                    └──────┬──────┘
ST21                       ↓
        ┌──────────────────────────────────┐
        │    Create theoretical variogram  │
        └──────────────────────────────────┘
ST22                       ↓
        ┌──────────────────────────────────┐
        │  Acquire variogram matrix between │
        │   measuring points of sensors     │
        └──────────────────────────────────┘
                           ↓
ST23                       ↓
        ┌──────────────────────────────────┐
        │ Select coordinates of estimation point │
        └──────────────────────────────────┘
ST24                       ↓
        ┌──────────────────────────────────┐
        │ Acquire variogram matrix between measuring │
        │  points of sensors and estimation point    │
        └──────────────────────────────────┘
ST25                       ↓
        ┌──────────────────────────────────┐
        │       Solve kriging equation      │
        └──────────────────────────────────┘
ST26                       ↓
        ┌──────────────────────────────────┐
        │     Output estimated value and    │
        │     estimated error variance      │
        └──────────────────────────────────┘
                           ↓
ST27              ╱─────────────────╲
                 ╱ Is end condition   ╲  No
                 ╲   satisfied?       ╱ ───→
                  ╲─────────────────╱
                           ↓ Yes
                    ┌─────────────┐
                    │     END     │
                    └─────────────┘
```

*FIG. 3*

START

ST31
Search for data pair

ST32
Calculate distance between
measuring points of sensors

ST33
Calculate degree of dissimilarity between
measuring points of sensors

ST34
Discard outlier

ST35
Has variogram cloud been
created?    No

Yes

ST36
Create experimental variogram

ST37
Select theoretical variogram model

ST38
Fitting

ST39
Is end condition satisfied?    No

Yes

END

## FIG. 4 A

## FIG. 4 B

## FIG. 4 C

## FIG. 4 D

FIG. 5

*FIG. 6*

*FIG. 7*

FIG. 8

## FIG. 9

## FIG. 10

1 — Estimation System

| 11 — Communications Unit | Processing Unit — 2 | Sensor — 3 |
| 12 — Storage Unit | Acquirer — 21 | Sensor — 3 |
| 13 — Operating Member | Kriger — 22 | Sensor — 3 |
| 14 — Display Device | Longitudinal Extender — 23 | Sensor — 3 |

FIG. 11 A

FIG. 11 B

FIG. 11 C

FIG. 11 D

FIG. 12 A

51

FIG. 12 B

83
51
81
82
84

FIG. 12 C

51
81
83
82
84

FIG. 12 D

51
81
83
82
84

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021012078 A
- JP 2021103019 A

- US 2013166241 A1

### Non-patent literature cited in the description

- Inverse distance weighting and kriging spatial interpolation for data center thermal monitoring. **OKTAVIA ESI et al.** 2016 1ST INTERNATIONAL CONFERENCE ON INFORMATION TECHNOLOGY, INFORMATION SYSTEMS AND ELECTRICAL ENGINEERING (ICITISEE). IEEE, 23 August 2016, 69-74